# EUROPÄISCHE PATENTSCHRIFT

(11) **EP 1 613 533 B1**
(45) Veröffentlichungstag und Bekanntmachung des Hinweises auf die Patenterteilung: **06.07.2011**
(21) Anmeldenummer: 04725919.7
(22) Anmeldetag: 06.04.2004
(51) Int. Cl.: B64C 27/33, B64C 27/48, B64C 27/28

(54) **GELENKLOSER ROTOR SOWIE DREHFL GELFLUGZEUG MIT EINEM SOLCHEN ROTOR**
NON-ARTICULATED ROTOR AND ROTORCRAFT COMPRISING A ROTOR OF THIS TYPE
ROTOR NON ARTICULE ET GIRAVION POURVU D'UN ROTOR DE CE TYPE

(30) Priorität: 08.04.2003 DE 10316094
(43) Veröffentlichungstag der Anmeldung: 11.01.2006
(73) Patentinhaber: EUROCOPTER DEUTSCHLAND GmbH, 86609 Donauwörth (DE)
(72) Erfinder: BECKER, Gerold, 82216 Maisach (DE); PFALLER, Rupert, 85521 Riemerling (DE)
(74) Vertreter: Pouillot, Laurent Pierre Paul
(86) Internationale Anmeldenummer: PCT/EP2004/003641
(87) Internationale Veröffentlichungsnummer: WO 2004/089746

(56) Entgegenhaltungen:
- DE-C- 19 837 802
- US-A- 4 299 538
- US-A- 5 820 344

## Beschreibung

### TECHNISCHES GEBIET

Die vorliegende Erfindung betrifft einen gelenklosen Rotor gemäß dem Oberbegriff des Patentanspruchs 1. Ferner betrifft die Erfindung ein Drehflügelflugzeug mit einem solchen Rotor.

### STAND DER TECHNIK

Auftriebserzeugende Rotorblätter eines gelenklosen Rotors für ein Drehflügelflugzeug werden überwiegend aus Faserverbundwerkstoff hergestellt. Die Rotorblätter werden im laufenden Rotorbetrieb in verschiedenen Richtungen ausgelenkt und dadurch stark belastet. Das Rotorblatt besitzt an seinem zu einem Rotorkopf hin weisenden Ende zumeist ein Strukturelement mit einem schlag- und schwenkweichen Bereich, das Bewegungen des Rotorblattes in einer Schlag- und Schwenkrichtung zulässt. Das Strukturelement wird auch als Flexbeam bezeichnet. Der schlag- und/oder schwenkweiche Bereich des Strukturelements wird zusammenfassend als biegeweicher Bereich bezeichnet. In Richtung der Rotorblattlängsachse hat das Strukturelement an seinem zum Rotorkopf weisenden Ende üblicherweise einen Blattanschluss ausgebildet, der eine Verbindung zum Rotorkopf oder einer Rotorkopfplatte ermöglicht.

Der Übergang vom Blattanschluss in den biegeweichen Bereich ist zu einem Rotorblatthals ausgebildet. Das Strukturelement überträgt einerseits das Antriebsdrehmoment vom Rotorkopf auf das Rotorblatt und anderseits die im Rotorbetrieb auf das Rotorblatt wirkenden Fliehkräfte auf den Rotorkopf. Damit das Strukturelement separat gefertigt bzw. bei Beschädigung leichter ausgetauscht werden kann, wird oft eine Trennstelle zwischen dem Strukturelement und dem Rotorblatt eingebaut. Der auftriebserzeugende Rotorblattbereich erstreckt sich von dieser Trennstelle bis zum äußersten Ende des Rotorblattes, d.h. bis zur Rotorblattspitze hin.

Der Blatthals des Strukturelements besitzt in der Regel den schlagweichen Bereich, der eine fiktive, horizontal orientierte Achse (auch fiktives oder virtuelles Schlaggelenk genannt) bildet, um welche das Rotorblatt Schlagbewegungen ausführt. Der Abstand zwischen dem fiktiven Schlaggelenk bis zur Rotorachse wird als Schlaggelenksabstand bezeichnet. Bei konventionellen gelenklosen Rotoren ist der sog. fiktive oder virtuelle Schlaggelenksabstand relativ groß und beträgt ca. 8 bis 12 % der Länge des Rotorkreisradius, gemessen von der Rotorachse in radialer Richtung nach außen zur Blattspitze hin.

Ein großer Schlaggelenksabstand eines gelenklosen Rotors führt im Betrieb zwar einerseits zu einer hohen Steuerfolgsamkeit und Wendigkeit des Hubschraubers, andererseits aber insbesondere zu einer hohen Schlageigenfrequenz. Diese relativ hohe Schlageigenfrequenz und die daraus resultierenden Vibrationen beim lagerlosen Rotor sind nachteilig für die Flugeigenschaften des Hubschraubers und führen zu hohen Belastungen des Blattanschlusses und des Blatthalses. Blattanschluss und Blatthals müssen deshalb entsprechend stark dimensioniert sein, um der den auftretenden Beanspruchung zu widerstehen. Bei herkömmlichen Hubschrauberrotoren wird aus diesen Gründen eine niedrige Schlag- und Schwenkeigenfrequenz angestrebt.

Infolge der hohen Belastungen des Rotorblattes und Blattanschlusses beim lagerlosen Rotor und der diesbezüglich zu gewährleistenden Festigkeit dieser Komponenten ist es äußerst schwierig, den Schlaggelenkabstand zu reduzieren bzw. unter ein bestimmten Wert zu bringen. Ein geringer Schlaggelenkabstand würde bei konventionellen lagerlosen Rotoren die Haltbarkeit und Lebensdauer des jeweiligen Rotorblattes erheblich reduzieren, was nachteilig oder sogar gefährlich ist. Anderseits wäre für diverse Einsatzzwecke ein niedriger Schlaggelenksabstand jedoch erstrebenswert, da Hubschrauber mit einem derartigen Rotor von Piloten, Besatzung und Fluggästen allgemein als komfortabler empfunden werden.

Ein großer Schlaggelenkabstands kann auch aus aerodynamischer Sicht nachteilig sein, da der Gesamtluftwiderstand der von der Rotorachse bis zum fiktiven Schlaggelenk reichenden Rotorelemente, insbesondere des o.g. Strukturelementes, recht hoch ist und darüber hinaus dieser Bereich, der einen relativ großer Anteil des Rotorradius einnimmt, nicht für einen aerodynamisch wirksamen Bereich des Rotorblattes genutzt werden kann.

Aus der DE 198 37 802 C1 ist ein dem Oberbegriff des Anspruchs 1 entsprechender gelenkloser Rotor für ein Drehflügelflugzeug bekannt, umfassend einen Rotorkopf, einen Rotormast mit einer Rotorachse, ein drehfest mit dem Rotormast verbundenes Drehmomentenübertragungselement, mindestens ein Auftrieb erzeugendes Rotorblatt sowie einen rotorkopfseitigen Rotorblattanschluss. Bei Rotoren der zuvor genannten Art umfasst der rotorkopfseitige Rotorblattanschluss neben dem weiter oben bereits beschriebenen Strukturelement in der Regel mindestens zwei Bolzen, die im Wesentlichen radial zur Rotationsachse des Rotors bzw. des Rotorblattes angeordnet sind. Über diese Bolzen wird das Schlagmoment und das Schwenkmoment abgesetzt. Das Strukturelement kann hierbei durch obere und untere Auflageflächen auf der Rotorkopfplatte abgestützt sein. Auch bei dieser Konstruktion existieren die zuvor erläuterten Nachteile.

Bei herkömmlichen gelenklosen Rotoren für konventionelle Hubschrauber wird eine niedrige Schlag- und Schwenkeigenfrequenz angestrebt, was durch schlag- und schwenkweiche Rotorblattanbindungen realisiert wird. Bei speziellen Rotoren, wie z.B. Kipprotoren (auch Tilt-Rotoren genannt) von Kipprotorhubschraubern bzw. -flugzeugen, ist aus folgenden Gründen jedoch eine andere Auslegung anzustreben: Wird der Rotor so konzipiert, dass die Schwenkeigenfrequenz des Rotors unter der sog. Anregungsfrequenz liegt, so entsteht ein erhöhtes Anregungspotential für Boden- und Luftresonanzen. Diese Resonanzerscheinungen werden bei herkömmlichen Rotoren durch Dämpfer kontrolliert. Die im Gegensatz zu einer steifen Zelle eines konventionellen Hubschraubers weiche Aufhängung der Kipprotoren am Flügel eines Kipprotorhubschraubers hingegen verursacht unerwünschte Kopplungen zwischen der Flügeleigenfrequenz und der Schwenkfrequenz, wenn eine Auslegung unter der Anregungsfrequenz erfolgt. Diese Gründe führen dazu, dass bei Kipprotoren ein schwenksteifer Rotor gefordert wird. Konventionelle gelenklose Rotoren sind für Kipprotoranwendungen daher nicht geeignet und würden zu Festigkeits- und Sicherheitsproblemen führen.

### DARSTELLUNG DER ERFINDUNG

Der Erfindung liegt die Aufgabe beziehungsweise das technische Problem zugrunde, einen neuartigen gelenklosen Rotor zu schaffen, der über verbesserte aerodynamische und mechanische Eigenschaften sowie einen möglichst geringen fiktiven bzw. virtuellen Schlaggelenkabstand verfügt. Der Rotor soll hierbei in mindestens einer Ausführungsform auch als Kipprotor geeignet sein. Ferner soll ein Drehflügelflugzeug mit einem solchen Rotor bereitgestellt werden.

Die zuvor genannte Aufgabe wird gemäß einem ersten Aspekt gelöst durch einen erfindungsgemäßen Rotor mit den Merkmalen des Anspruchs 1.

Dieser gelenklose Rotor, insbesondere für ein Drehflügelflugzeug, umfasst einen Rotorkopf, einen Rotormast mit einer Rotorachse, ein drehfest mit dem Rotormast verbundenes Drehmomentenübertragungselement (z.B. einen Rotorkopfstern, eine Rotorkopfplatte, oder dergleichen), mindestens ein Rotorblatt (vorzugsweise jedoch mehr als zwei Rotorblätter) und einen rotorkopfseitigen Rotorblattanschluss. Der Rotor ist dadurch gekennzeichnet, dass der rotorkopfseitige Rotorblattanschluss eine fliehkraftabtragende Blattanschlussschlaufe besitzt, welche die Rotorachse bzw. den Rotormast umschlingt und mit dem Drehmomentenübertragungselement drehfest verbunden ist.

Bei der erfindungsgemäßen Lösung ist der Blattanschluss also um die Rotorachse bzw. den Rotormast herum geführt. Eine Umschlingung nur der Rotorachse kann beispielsweise dann vorliegen, wenn der Rotormast selbst in axialer Richtung unterhalb der Blattanschlussschlaufen endet und nicht direkt durch die Schlaufen hindurchgeführt, was bei bestimmten Rotormastanbindungen der Fall sein kann. Zwischen der Blattanschlussschlaufe und dem Rotormast besteht vorzugsweise keine direkte Verbindung bzw. kein direkter Kontakt. D.h., die Blattanschlussschlaufe umschlingt den Rotormast vorzugsweise anbindungsfrei, wie nachfolgend noch im Detail erläutert werden wird. Zur Lastabtragung der Rotorblatt-Fliehkräfte ist die Blattanschlussschlaufe entweder mit dem Drehmomentenübertragungselement (bzw. einer Komponente davon) und/oder direkt oder indirekt (z.B. über ein Zwischenelement) mit der Blattanschlussschlaufe von mindesten einem weiteren Rotorblatt verbunden. Die Blattanschlussschlaufe geht an ihrer der Rotorblattspitze zugewandten Seite zweckmäßiger Weise in einen Schlaufenfußbereich oder einen Rotorblatthals über bzw. besitzt eine Trennstelle zur lösbaren Anbindung an einen Rotorblatthals.

Der erfindungsgemäße gelenklose Rotor verfügt über verbesserte aerodynamische und mechanische Eigenschaften sowie einen sehr geringen fiktiven bzw. virtuellen Schlaggelenkabstand. Mittels der Blattanschlussschlaufe des erfindungsgemäßen Rotors sind auch bei einem mehrblättrigen Rotor identische Rotorblattanschlüsse bereitstellbar. Über die Blattanschlussschlaufe ist ein jeweiliges Rotorblatt sehr biegeweich bzw. mit einer größeren Anschlussweichheit und mit einem kleinen, d.h. gegenüber konventionellen gelenklosen Rotoren erheblich verringerten fiktiven Schlaggelenksabstand, am Rotorkopf zu befestigen.

Da die Blattanschlussschlaufe in der Regel keine direkte Anbindung zum Rotormast besitzt, also gegenüber dem Rotormast frei beweglich ist, und baulich sehr flach und aerodynamisch günstig ausführbar ist, kann sich die Schlaufe bis zur Rotorachse - oder sogar über die Rotorachse hinweg - in Schlagrichtung nahezu ungehindert elastisch verbiegen. Der daraus resultierende fiktive Schlaggelenkabstand kann deshalb bis zu 0% betragen. Dadurch ist ohne diskrete Bauteile und nur durch die Elastizität bzw. Biegsamkeit der Blattanschlussschlaufe und/oder angrenzender Rotorblattbereiche z.B. ein sog. Gimbalrotor realisierbar. Ein Rotor mit einem geringen Schlaggelenkabstand wird von Passagieren eines Drehflügelflugzeugs vom Flugverhalten her als angenehm empfunden. Zudem gestattet die erfindungsgemäße Ausgestaltungsweise eine Reduzierung der am Rotor auftretenden Vibrationen und eine Verbesserung des Flugverhaltens bzw. der Flugeigenschaften.

Die Blattanschlussschlaufe bzw. ihr Schlaufenfußbereich kann überdies ein fiktives Schwenkgelenk ausbilden und zudem bei Bedarf sehr verdrehweich ausgestaltet werden, so dass sich auf einfache Art und Weise eine lagerlose Blattwinkelverstellung realisieren lässt. Die Blattanschlussschlaufe bzw. Teilbereiche davon können also zusätzlich die Funktion eines sehr kurzen und kompakten Drillelementes zur Blattwinkelverstellung übernehmen. Zumindest Teilbereiche der Blattanschlussschlaufe und/oder angrenzender Rotorblattbereiche können hierbei z.B. durch eine sog. Steuertüte verkleidet sein.

Darüber hinaus ist die zur Ausbildung des virtuellen Schlaggelenks erforderliche Teillänge des zur Verfügung stehenden Rotorkreisradius gegenüber konventionellen gelenk- bzw. lagerlosen Rotoren sehr gering. Die so eingesparten Abschnitte des Rotorkreisradius stehen ergo für aerodynamisch wirksame Profilbereiche eines Rotorblattes zur Verfügung. Der Luftwiderstand wird somit reduziert und der Auftrieb erhöht. In Verbindung mit der per se sehr dünn bzw. flach ausführbaren Bauweise der Rotorblattanschlussschlaufe wird folglich die aerodynamische Güte des Rotors verbessert. Der erfindungsgemäße Rotor kann grundsätzlich sowohl mit einer hohen als auch geringen Schwenksteifigkeit ausgestaltet werden, wobei die Schlag- und Schwenksteifigkeit nahezu unabhängig voneinander konstruktiv voreinstellbar ist. Die breite Schlaufenform des Blattanschlusses bzw. des Schlaufenfußbereichs sowie weitere in diesem Zusammenhang mögliche bauliche Maßnahmen, die nachstehend im Detail erläutert werden, ermöglichen jedoch insbesondere die einfache Ausführung einer schwenksteifen Anbindung der Rotorblätter an den Rotorkopf.

Dies ist in Verbindung mit dem erzielbaren geringen Schlaggelenkabstand von bis zu 0% für spezielle Anwendungsfälle, wie zum Beispiel bei einem Kipprotor für einen Kipprotorhubschrauber oder ein Kipprotorflugzeug, von großem Vorteil. Denn auf diese Weise lassen sich die ansonsten beim Kippen des Kipprotors in Verbindung mit einer Schlagbewegung des Rotorblattes entstehenden Schwenkverformungen aus Corioliskräften vermeiden. Somit ist eine den auftretenden Belastungen vorteilhaft angepasste Bauweise und eine hohe Festigkeit des Rotors bei gleichzeitig geringem Gewicht erreichbar. Bei einer schwenksteifen Konstruktion eines Rotors mit großem Schlaggelenkabstand und folglich ungeminderter Corioliskraft hingegen kann es u.U. unmöglich werden, eine hinreichende Stabilität des Kipprotors zu gewährleisten.

Mit Hilfe des erfindungsgemäßen Schlaufenprinzips ist es des Weiteren möglich, den Rotormast sowie ggf. weitere Zusatzelemente der Blattanschlussschlaufe fliehkraftfrei" d.h. von dem im laufenden Rotorbetrieb auf die Rotorblatter wirkenden sehr hohen Fliehkräfte unbelastet, zu halten. Dies wird nachfolgend noch ausführlich beschrieben werden. Diese vorteilhafte Wirkung ist insbesondere bei mehrblättrigen Rotoren sehr einfach zu erzielen. Je nach Ausgestaltungsweise des Rotors können sich die Fliehkräfte von jeweils gegenüberliegenden Rotorblättern sogar gegenseitig aufheben. Die Fliehkraft wird hierbei sehr günstig über den relativ großen Schlaufendurchmesser, der mindestens dem Durchmesser des Rotormastes entspricht, in der Regel aber größer sein sollte, abgesetzt.

Weitere bevorzugte und vorteilhafte Ausgestaltungsmerkmale des erfindungsgemäßen Rotors sind Gegenstand der Unteransprüche 2 bis 18.

Die oben genannte Aufgabe wird gemäß einem zweiten Aspekt gelöst durch ein erfindungsgemäßes Drehflügelflugzeug mit den Merkmalen des Anspruchs 19. Mit dem erfindungsgemäßen Drehflügelflugzeug sind im Wesentlichen die gleichen Vorteile zu erzielen, wie sie bereits weiter oben im Zusammenhang mit dem erfindungsgemäßen Rotor erläutert wurden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische, stark vereinfachte perspektivische Darstellung eines erfindungsgemäßen Rotors gemäß einer ersten Ausführungsform;
- Fig. 2: eine schematische, stark vereinfachte perspektivische Darstellung eines einzelnen Rotorblattanschlusses des Rotors von Fig. 1;
- Fig. 3: eine schematische Seitenansicht des Rotors von Fig. 1 in Blickrichtung der Pfeile III-III in Fig. 1; und
- Fig. 4: eine schematische, stark vereinfachte perspektivische Darstellung eines erfindungsgemäßen Rotors gemäß einer zweiten Ausführungsform.

### DARSTELLUNG VON BEVORZUGTEN AUSFÜHRUNGSBEISPIELEN

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

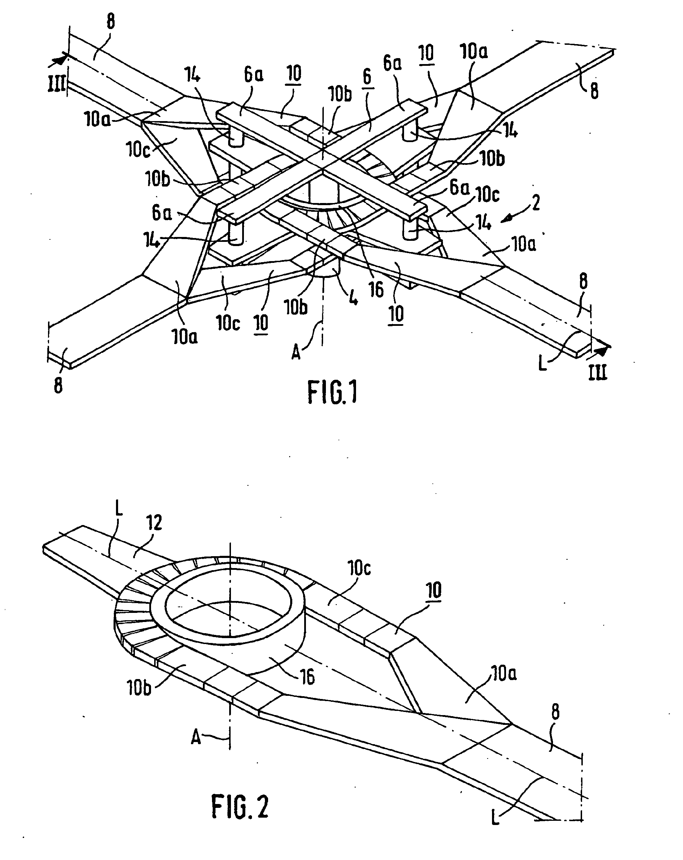

Fig. 1 zeigt eine schematische, stark vereinfachte perspektivische Darstellung eines erfindungsgemäßen gelenklosen Rotors gemäß einer ersten Ausführungsform. In der Fig. 2 ist eine schematische, stark vereinfachte perspektivische Darstellung eines einzelnen Rotorblattanschlusses des Rotors von Fig. 1 veranschaulicht. Der erfindungsgemäße gelenklose Rotor, der hier gleichzeitig als lagerloser Rotor ausgestaltet ist, umfasst einen Rotorkopf 2, einen Rotormast 4 mit einer Rotorachse A und ein drehfest mit dem Rotormast 4 verbundenes Drehmomentenübertragungselement 6, welches in diesem Beispiel als ein kreuzförmiger Rotorkopfstern 6 mit vier Armen 6a ausgestaltet ist. Ferner ist der Rotor mit vier gleichartigen Rotorblättern 8 ausgestattet, von denen jedes einem jeweiligen Arm 6a zugeordnet ist.

Für jedes Rotorblatt 8 umfasst der Rotor einen rotorkopfseitigen Rotorblattanschluss mit einer fliehkraftabtragenden Blattanschlussschlaufe 10, welche den Rotormast 4 anbindungsfrei umschlingt und mit dem Rotorkopfstern 6 drehfest verbunden ist. Die Blattanschlussschlaufe 10 ist im Wesentlichen aus Faserverbundwerkstoff gefertigt und bildet ein Strukturelement mit einem schlag-, schwenk- und torsionsweichen Bereich. Wie in den Fig. 1 und 2 erkennbar, erstreckt sich die Blattanschlussschlaufe 10 in Längsrichtung L des zugehörigen Rotorblattes 8 und ist in diesem Ausführungsbeispiel integraler Bestandteil des Rotorblattes 8. Grundsätzlich kann die Blattanschlussschlaufe 10 jedoch auch als ein vom Rotorblatt 8 separates Bauteil ausgestaltet sein und zum Beispiel über eine Trennstelle lösbar mit dem Rotorblatt 8 verbunden werden. Wie in den Zeichnungen erkennbar, ist die Blattanschlussschlaufe 10 länglich ausgebildet. Die Schlaufenöffnung liegt in einer zur Rotorachse A im Wesentlichen parallelen Richtung. Die Blattanschlussschlaufe 10 ist in diesem Fall in sich geschlossen ausgebildet und geht an ihrer einer Rotorblattspitze (nicht gezeigt) zugewandten Seite in einen Schlaufenfußbereich 10a über, der an einen Rotorblatthals angrenzt. An diesem Schlaufenfußbereich 10a laufen die beiden Schlaufenarme 10b, 10c des Schlaufenstrangs allmählich zusammen.

Grundsätzlich kann die Blattanschlussschlaufe 10 jedoch auch offen ausgebildet sein und über mindestens ein Schlaufenschließelement zum Verschließen der offenen Blattanschlussschlaufe 10 verfügen. Zum Beispiel ist es denkbar, dass die jeweilige Blattanschlussschlaufe 10 an ihrem Schlaufenfußbereich 10a aufgeschlitzt ist, so dass bei einem mehrblättrigen Rotor die Schlaufen 10 durch Ineinanderstecken in der in Fig. 1 gezeigten Konfiguration montiert werden können. Durch geeignete Verbindungsmittel, z.B. Verschraubungen könnte der offene Blattanschlussstrang 10 dann wieder geschlossen werden. Auch eine zwei- oder mehrteilige Schlaufenkonstruktion ist denkbar.

Die jeweilige Blattanschlussschlaufe 10 und ihr Schlaufenfußbereich 10a besitzen einen abgeflachten, streifenförmigen Querschnitt. Dadurch ist die Blattanschlussschlaufe 10 in Schlagrichtung der Rotorblätter 8 biegeweich bzw. schlagweich und in Schwenkrichtung biegesteif bzw. schwenksteif ausgebildet. Gleichzeitig ergibt sich im Blattanschlussbereich eine relativ hohe Torsionsweichheit, was für eine lagerlose Blattwinkelverstellung von Vorteil ist.

Wie besonders deutlich aus Fig. 2 hervorgeht, besitzt die Blattanschlussschlaufe 10 einen von der Achse A des Rotormastes 4 radial beabstandeten Verbindungsabschnitt 12, der hier als dünne bzw. flache, schwenksteife Verbindungslasche 12 ausgestaltet und in Längsrichtung L des Rotorblattes 8 an der der Rotorblattspitze abgewandten Seite der Blattanschlussschlaufe 10 angeordnet ist. An dieser Verbindungslasche 12 ist die Blattanschlussschlaufe 10 über einen Bolzen 14, der sich durch eine Bohrung oder Öffnung in der Verbindungslasche 12 erstreckt, oder ein anderes geeignetes Verbindungselement drehfest mit dem Rotorkopfstern 6 bzw. dessen Armen 6a verbunden (vgl. Fig. 1). Die Bohrung oder Öffnung kann in radialer Richtung des Rotors in geringfügigem Maße als Langloch ausgeführt sein.

Die Länge der Verbindungslasche 12 und damit der radiale Abstand zur Rotorachse A sowie die Dicke der Verbindungslasche 12 beeinflusst hierbei den fiktiven Schlaggelenksabstand und die Schlagsteifigkeit, die Länge und Breite die Schwenksteifigkeit. Die Schwenksteifigkeit wird zusätzlich auch durch den gegenseitigen Abstand der Schlaufenarme 10b, 10c sowie der Breite des Schlaufenfußbereiches 10a beeinflusst.

Wie in Fig. 1 veranschaulicht, sind die Blattanschlussschlaufen 10 der Rotorblätter 8 ineinanderhängend ausgebildet bzw. ineinandergeschachtelt oder hängen im montierten Zustand des Rotors ineinander. Diese Ineinanderschachtelung kann bei in sich geschlossenen Blattanschlussschlaufen 10 entweder bei deren Fertigung oder bei zu öffnenden Schlaufen bei deren Montage erfolgen.

Aus den Fig. 1 und 2 geht ein weiteres wichtiges Ausgestaltungsdetail des erfindungsgemäßen Rotors hervor. Wie in diesen Zeichnungen verdeutlicht, erstreckt sich der Rotormast 4 im Bereich des Rotorkopfes 2 anbindungsfrei bzw. berührungslos durch eine ringartige Fliehkrafthülse 16 hindurch. Und die jeweilige Blattanschlussschlaufe 10 ist derart um die Fliehkrafthülse 16 herum gelegt, dass der Innenumfang des um den Rotormast 4 und die Fliehkrafthülse 16 verlaufenden Schlaufenabschnitts großflächig am Außenumfang der Fliehkrafthülse 16 anliegt. Bei dem vierblättrigen Rotor des vorliegenden Ausführungsbeispiels umschlingen die Blattanschlussschlaufen 10 die Fliehkrafthülse 16 also jeweils um einen Winkel von 90° versetzt.

Zwischen der Fliehkrafthülse 16 und dem Rotormast 4 besteht, wie gesagt, keine direkte Anbindung, was hier dadurch erreicht ist, dass der Innendurchmesser der Fliehkrafthülse 16 größer als der Außendurchmesser des Rotormastes 4 ist und ein Freiraum zwischen der Fliehkrafthülse 16 und dem Rotormast 4 besteht. Die Fliehkrafthülse 16 ist damit frei gegenüber dem Rotormast 4 beweglich. Man könnte auch sagen, die Fliehkrafthülse 16 ist schwimmend angeordnet. Sie ist z.B. aus einem metallischen Werkstoff hergestellt, sie kann jedoch auch aus einem Faserverbundwerkstoff oder anderen geeigneten Materialen gefertigt sein.

Damit die Fliehkrafthülse 16 nicht axial verrutscht oder herausfällt, kann zwischen der Fliehkrafthülse 16 und dem Rotormast 4 z.B. ein elastisches Zwischenelement (ein Elastomerelement oder dergleichen) angeordnet sein. Dieses ist in der Fig. 1 der Übersichtlichkeit halber nicht dargestellt. Das elastische Zwischenelement kann auch Dämpfungsfunktionen übernehmen und ist gleichzeitig der Anschlussweichheit der Rotorblätter 8 zuträglich, ohne hierbei die insbesondere für das Schlagen der Rotorblätter 8 erforderliche Biegeverformung der Blattanschlussschlaufen 10 zu behindern. Für eine axiale Sicherung der Fliehkrafthülse 16 kann diese z.B. auch einen oder mehrere Kragen, Flansche, Vorsprünge oder andere Sicherungselemente aufweisen, welche sich z.B. am Rotorkopfstern 6 und/oder den Blattanschlussschlaufen 10 abstützen.

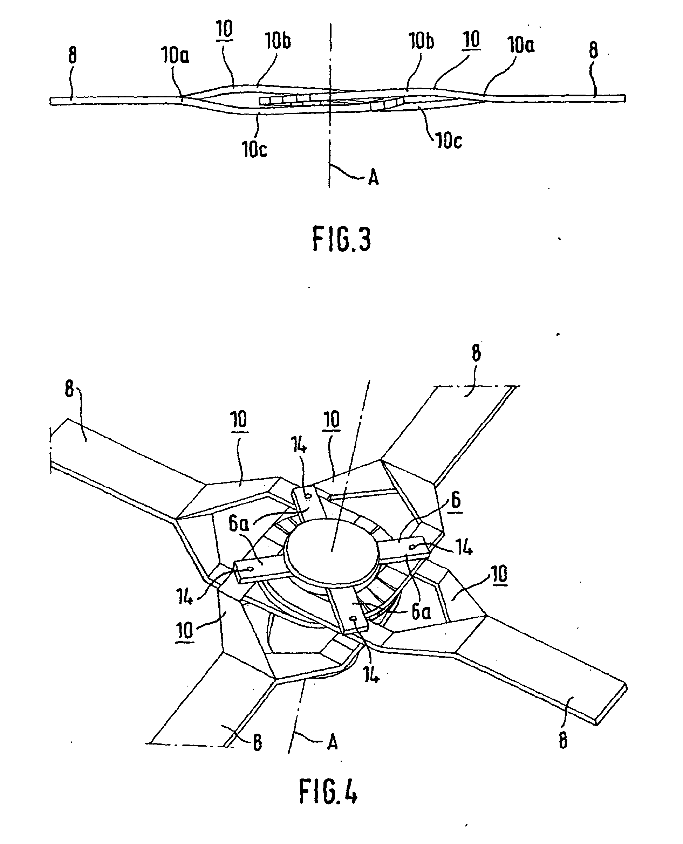

Fig. 3 zeigt eine schematische Seitenansicht des Rotors von Fig. 1 in Blickrichtung der Pfeile III-III in Fig. 1. Aus Gründen der besseren Übersichtlichkeit sind in der Fig. 3 nur zwei Rotorblätter 8 dargestellt, und der Rotorkopfstern 6 sowie der Rotormast 4 wurden weggelassen. Wie der Zeichnung entnehmbar ist, besitzt eine jeweilige Blattanschlussschlaufe 8 zwei Schlaufenabschnitte (d.h. die Schlaufenarme 10b, 10c), die sich bezogen auf die Axialrichtung bzw. Achse A des Rotormastes 4 weitgehend in unterschiedlichen Ebenen relativ zueinander erstrecken und zu einer Schlaufe vereinigt sind. Dies ist für die Ineinanderschachtelung der einzelnen Rotorblattschlaufen 10 wichtig und gewährleistet gleichzeitig, dass alle Rotorblätter 8 in einer gemeinsamen Ebene liegen.

Grundsätzlich ist es im Sinne der Erfindung jedoch auch denkbar, dass die Schlaufenabschnitte 6a der Blattanschlussschlaufe 10 selbst in einer gemeinsamen Ebene liegen. Bei einem Rotor mit mehreren Rotorblättern 8 können die Blattanschlussschlaufen 10 dann z.B. in Axialrichtung A des Rotormastes 4 übereinander gelegt oder geschichtet sein. Der dadurch entstehende axiale Versatz der Rotorblätter 8 ist hierbei aufgrund der geringen Dicke der Blattanschlussschlaufen 10 vernachlässigbar.

Bei der erfindungsgemäßen Rotorkonstruktion trägt die gegenüber dem Rotormast 4 frei bewegliche ringartige Fliehkrafthülse 16 die im laufenden Rotorbetrieb an den drehenden Rotorblättern 8 auftretenden sehr hohen Fliehkräfte ab und verhindert, dass diese direkt auf den Rotormast 4 lasten. Da mehrere Rotorblätter 8 über ihre Blattanschlussschlaufen 10 an die Fliehkrafthülse 16 angeschlossen sind und sich die Rotorblätter 8 paarweise gegenüberliegen, wird über die Fliehkrafthülse 16 gewissermaßen ein durchgehender, unterbrechungsfreier Fliehkraftstrang zu dem jeweils gegenüberliegenden Rotorblatt 8 gebildet, wobei der Kraftfluss um den Rotormast 4 herum verläuft. Dies hat den Vorteil, dass die beträchtlichen Fliehkräfte eines jeweiligen Rotorblattes 8 direkt durch das gegenüberliegende Rotorblatt 8 abgesetzt und kompensiert werden. Es sei an dieser Stelle angemerkt, dass dieses Prinzip auch dann funktioniert, wenn der Rotor über eine Rotorblattzahl, z.B. eine ungerade Rotorblattzahl, verfügt, bei dem die sich die jeweiligen Rotorblätter 8 nicht um 180° versetzt gegenüberliegen, da sich die jeweiligen Fliehkraftanteile entsprechend verteilen.

Der große Durchmesser der Fliehkrafthülse 16 in Verbindung mit einem entsprechend angepassten großen Schlaufenradius der Blattanschlussschlaufen 10 gewährleistet eine günstige Krafteinleitung und Belastungsverteilung. Diese Bauteile können daher mit einer geringen Wandstärke gebaut werden, was wiederum der Schlagweichheit und einem geringen Gewicht zugute kommt.

Die Verbindungslaschen 12 haben bei dem erfindungsgemäßen gelenklosen Rotor die Aufgabe, die im laufenden Rotorbetrieb auftretenden Schwenkmomente aufzunehmen und das Antriebsdrehmoment auf den Rotor zu übertragen. Da die von den Rotorblättern 8 ausgehenden Fliehkräfte, wie gesagt, von der Fliehkrafthülse 16 abgetragen werden, sind die Verbindungslaschen 12 im normalen Rotorbetrieb nicht durch diese Fliehkräfte beaufschlagt. Die an den Verbindungslaschen 12 auftretenden Belastungen sind deshalb nur relativ gering, und die Verbindungslaschen 12 können folglich sehr dünn, leicht und in Schlagrichtung sehr biegeweich ausgeführt werden. Darüber hinaus bieten die Verbindungslasche 12 und der Bolzen 14, mit dem die Lasche 12 am Rotorkopfstern 6 befestigt ist, im Falle des Versagens oder übermäßigen Deformierens der Fliehkrafthülse 16 eine vorteilhafte Redundanz, da sie dann die Fliehkräfte der Rotorblätter 8 noch im Notbetrieb aufnehmen und auf den Rotorkopfstern 6 übertragen können.

Insgesamt sind bei dem erfindungsgemäßen Rotor also diejenigen Bereiche, welche die Rotorblatt-Fliehkräfte abtragen (d.h. die reinen Blattanschlussschlaufen 10) und diejenigen Teile, welche ein Antriebsdrehmoment vom Rotormast auf den Rotorkopf übertragen (d.h. die Verbindungslaschen 12), sowohl funktional als auch belastungsmäßig voneinander getrennt in einem gemeinsamen Bauteil ausgebildet. Der ganze Rotorkopf 2 kann somit - nur beeinflusst durch die Steifigkeit bzw. Biegeweichheit der Verbindungslaschen 12 und der Blattanschlussschlaufen 10 - in Schlagrichtung, verschiedene Neigungen gegenüber dem Rotormast 4 einnehmen. Dies erlaubt es zum Beispiel, den erfindungsgemäßen Rotor ohne diskrete Elemente nur durch die Elastizität der beteiligten Bauelemente als einen sogenannten Gimbalrotor auszugestalten.

Fig. 4 zeigt eine schematische, stark vereinfachte perspektivische Darstellung eines erfindungsgemäßen Rotors gemäß einer zweiten Ausführungsform. Diese Version entspricht weitgehend der von Fig. 1 bis 3. Davon abweichend besitzen die Blattanschlussschlaufen 10 jedoch keine Verbindungslasche und der Rotorkopfstern 6 mit seinen Armen 6a ist im Vergleich zu Fig. 1 um ca. 45° versetzt angeordnet. Die Blattanschlussschlaufen 10 sind an einem Überlappungsbereich ihrer jeweiligen Schlaufenstränge jeweils über einen Bolzen 14 oder ein anderes geeignetes Verbindungsmittel sowohl drehfest mit dem Rotorkopfstern 6 als auch untereinander verbunden. Pro Schlaufe 10 ergeben sich damit jeweils zwei Verbindungsstellen.

Der erfindungsgemäße Rotor wird bei einem Drehflügelflugzeug, insbesondere bei einem Hubschrauber oder einem Kipprotorhubschrauber eingesetzt. Ein solches Drehflügelflugzeug kann je nach Ausgestaltungsform einen oder mehrere erfindungsgemäße Rotoren aufweisen.

Die Erfindung ist nicht auf die obigen Ausführungsbeispiele, die lediglich der allgemeinen Erläuterung des Kerngedankens der Erfindung dienen, beschränkt. Im Rahmen des Schutzumfangs kann der erfindungsgemäße Rotor vielmehr auch andere als die oben konkret beschriebenen Ausgestaltungsformen annehmen. Der Rotor kann hierbei insbesondere Merkmale aufweisen, die eine Kombination aus den Merkmalen des Hauptanspruchs und allen oder nur einigen Einzelmerkmalen der zugehörigen Unteransprüche darstellen, wie durch die jeweiligen Rückbezüge angedeutet ist. Der erfindungsgemäße Rotor kann insbesondere für eine andere Anzahl von Rotorblätter als in den obigen Beispielen ausgebildet sein. Er kann z.B. auch ein, zwei, drei, fünf oder mehr Rotorblätter aufweisen. Im Falle eines einblättrigen Rotors kann beispielsweise ein Rotorblatt-Gegengewicht, welches ebenfalls eine Anschlussschlaufe aufweist und gegenüber dem Rotorblatt um 180° versetzt angeordnet ist, die Fliehkraftkompensation übernehmen. Des Weiteren ist es möglich, dass die Blattanschlussschlaufe mehrere nebeneinander und/oder übereinander verlaufende Schlaufenstränge oder Schlaufenschichten besitzt, welche sowohl untereinander verbunden als auch lose übereinanderliegend angeordnet sein können. Die Blattanschlussschlaufe kann also in mehreren Richtungen und Ebenen nochmals aufgeteilt sein.

Anstelle einer aus einem geschlungenen Schlaufenstrang gebildeten Blattanschlussschlaufe kann auch eine Variante vorgesehen sein, bei der die Schlaufe in Form eines mit einer Bohrung versehenen Lochleibungslaminats ausgebildet ist, wobei sich die Rotorachse A bzw. der Rotormast durch diese Bohrung erstreckt. Ein solches Lochleibungslaminat ist insbesondere aus einem plattenförmigen Werkstück herstellbar.

Eine Blattanschlussschlaufe kann zudem nicht nur eine, sondern auch mehrere Verbindungslaschen aufweisen, die nicht oder nicht nur in Längsrichtung des Rotorblattes an der einer Rotorblattspitze abgewandten Seite der Blattanschlussschlaufe angeordnet sein müssen, sondern auch an anderen Stellen der Blattanschlussschlaufe vorgesehen sein können.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Rotorkopf
- 4: Rotormast
- 6: Rotorkopfstern / Drehmomentenübertragungselement
- 6a: Arme von 6
- 8: Rotorblätter
- 10: Blattanschlussschlaufe
- 10a: Schlaufenfußbereich
- 10b: Schlaufenarm
- 10c: Schlaufenarm
- 12: Verbindungslasche / Verbindungsabschnitt
- 14: Bolzen
- 16: Ringartige Fliehkrafthülse

- A: Rotorachse
- L: Rotorblatt-Längsachse

## Patentansprüche

1. Gelenkloser Rotor, insbesondere für ein Drehflügelflugzeug, umfassend:
einen Rotorkopf (2), einen Rotormast (4) mit einer Rotorachse (A), ein drehfest mit dem Rotormast verbundenes Drehmomentenübertragungselement (6), mindestens ein Rotorblatt (8) und einen rotorkopfseitigen Rotorblattanschluss,
**dadurch gekennzeichnet, dass**
der rotorkopfseitige Rotorblattanschluss eine fliehkraftabtragende Blattanschlussschlaufe (10) besitzt, welche die Rotorachse (A) bzw. den Rotormast (4) umschlingt und mit dem Drehmomentenübertragungselement (6) drehfest verbunden (12, 14) ist.

2. Rotor nach Anspruch 1,
**dadurch gekennzeichnet, dass**
sich die Blattanschlussschlaufe (10) in Längsrichtung (L) des Rotorblattes (8) erstreckt.

3. Rotor nach Anspruch 1 oder 2,
**dadurch gekennzeichnet, dass**
die Blattanschlussschlaufe (10) in sich geschlossen ist.

4. Rotor nach Anspruch 1 oder 2,
**dadurch gekennzeichnet, dass**
die Blattanschlussschlaufe (10) offen ausgebildet ist und über mindestens ein Schlaufenschließelement zum Verschließen der offenen Blattanschlussschlaufe (10) verfügt.

5. Rotor nach einem oder mehreren der vorhergenannten Ansprüche,
**dadurch gekennzeichnet, dass**
die Blattanschlussschlaufe (10) einen abgeflachten, streifenförmigen Schlaufenstrang besitzt.

6. Rotor nach einem oder mehreren der vorhergenannten Ansprüche,
**dadurch gekennzeichnet, dass**
die Blattanschlussschlaufe (10) mindestens zwei Schlaufenabschnitte (10b, 10c) besitzt, die sich weitgehend in unterschiedlichen Ebenen relativ zueinander erstrecken und zu einer Schlaufe vereinigt sind.

7. Rotor nach einem oder mehreren der vorhergenannten Ansprüche,
**dadurch gekennzeichnet, dass**
Blattanschlussschlaufe (10) mehrere nebeneinander und/oder übereinander verlaufende Schlaufenstränge besitzt.

8. Rotor nach einem oder mehreren der vorhergenannten Ansprüche,
**dadurch gekennzeichnet, dass**
die Blattanschlussschlaufe (10) integraler Bestandteil des Rotorblattes (8) ist.

9. Rotor nach einem oder mehreren der vorhergenannten Ansprüche, mit mehreren Rotorblätter (8),
**dadurch gekennzeichnet, dass**
die Blattanschlussschlaufen (10) der mehreren Rotorblätter (8) in Axialrichtung (A) des Rotormastes (4) übereinander angeordnet sind.

10. Rotor nach einem oder mehreren der vorhergenannten Ansprüche, mit mehreren Rotorblätter (8),
**dadurch gekennzeichnet, dass**
die Blattanschlussschlaufen (10) der mehreren Rotorblätter (8) ineinanderhängend ausgebildet sind.

11. Rotor nach einem oder mehreren der vorhergenannten Ansprüche, mit mehreren Rotorblätter (8),
**dadurch gekennzeichnet, dass**
die Blattanschlussschlaufen (10) der mehreren Rotorblätter (8) an mindestens einer Stelle miteinander verbunden (14) sind.

12. Rotor nach einem oder mehreren der vorhergenannten Ansprüche,
**dadurch gekennzeichnet, dass**
die Blattanschlussschlaufe (10) in Form eines mit einer Bohrung versehenen Lochleibungslaminats ausgebildet ist und sich die Rotorachse (A) durch diese Bohrung erstreckt.

13. Rotor nach einem oder mehreren der vorhergenannten Ansprüche,
**dadurch gekennzeichnet, dass**
die Blattanschlussschlaufe (10) mindestens einen von der Achse (A) des Rotormastes (4) radial beabstandeten Verbindungsabschnitt (12) besitzt, an dem die Blattanschlussschlaufe (10) mit dem Drehmomentenübertragungselement (6) verbunden ist.

14. Rotor nach einem oder mehreren der vorhergenannten Ansprüche,
**dadurch gekennzeichnet, dass**
der Verbindungsabschnitt als mindestens eine Verbindungslasche (12) ausgestaltet ist.

15. Rotor nach einem oder mehreren der vorhergenannten Ansprüche,
**dadurch gekennzeichnet, dass**
die mindestens eine Verbindungslasche (12) in Längsrichtung (L) des Rotorblattes (8) an der einer Rotorblattspitze abgewandten Seite der Blattanschlussschlaufe (10) angeordnet ist.

16. Rotor nach einem oder mehreren der vorhergenannten Ansprüche,
**dadurch gekennzeichnet, dass**
sich der Rotormast (4) im Bereich des Rotorkopfes (2) anbindungsfrei durch eine ringartige Fliehkrafthülse (16) erstreckt, und die Blattanschlussschlaufe (10) um die Fliehkrafthülse (16) herum gelegt ist.

17. Rotor nach einem oder mehreren der vorhergenannten Ansprüche,
**dadurch gekennzeichnet, dass**
zwischen der ringartigen Fliehkrafthülse (16) und dem Rotormast (4) ein elastisches Zwischenelement angeordnet ist.

18. Rotor nach einem oder mehreren der vorhergenannten Ansprüche,
**dadurch gekennzeichnet, dass**
dieser zusätzlich als lagerloser Rotor ausgebildet ist.

19. Drehflügelflugzeug, insbesondere ein Hubschrauber, insbesondere ein Kipprotorhubschrauber, umfassend mindestens einen gelenklosen Rotor nach einem oder mehreren der Ansprüche 1 bis 18.

## Claims

1. Hingeless rotor, in particular for a rotorcraft, comprising: a rotor head (2), a rotor mast (4) having a rotor axis (A), a torque-transmission element (6) nonrotatably joined to the rotor mast, at least one rotor blade (8), and a rotor-head-side rotor-blade connector,
**characterised in that**
the rotor-head-side rotor-blade connector has a centrifugal-force-discharging blade connector loop (10) that loops around the rotor axis (A) or the rotor mast (4) and is nonrotatably joined (12, 14) to the torque-transmission element (6).

2. Rotor according to Claim 1,
**characterised in that**
the blade connector loop (10) extends in the longitudinal direction (L) of the rotor blade (8).

3. Rotor according to Claim 1 or 2,
**characterised in that**
the blade connector loop (10) is closed in itself.

4. Rotor according to Claim 1 or 2,
**characterised in that**
the blade connector loop (10) is of open configuration and includes at least one loop closure element for closing the open blade connector loop (10).

5. Rotor according to one or more of the preceding claims,
**characterised in that**
the blade connector loop (10) has a flattened, strip-shaped loop segment.

6. Rotor according to one or more of the preceding claims,
**characterised in that**
the blade connector loop (10) has at least two loop portions (10b, 10c) that extend largely in different planes relative to one another and are combined into a loop.

7. Rotor according to one or more of the preceding claims,
**characterised in that**
the blade connector loop (10) has a plurality of loop segments, the multiple loop segments extending next to and/or above each other.

8. Rotor according to one or more of the preceding claims,
**characterised in that**
the blade connector loop (10) is an integral component of the rotor blade (8).

9. Rotor according to one or more of the preceding claims, having a plurality of rotor blades (8),
**characterised in that**
the blade connector loops (10) of the plurality of rotor blades (8) are disposed one above another in the axial direction (A) of the rotor mast (4).

10. Rotor according to one or more of the preceding claims, having a plurality of rotor blades (8),
**characterised in that**
the blade connector loops (10) of the plurality of rotor blades (8) are embodied in intersuspended fashion.

11. Rotor according to one or more of the preceding claims, having a plurality of rotor blades (8),
**characterised in that**
the blade connector loops (10) of the plurality of rotor blades (8) are joined (14) to one another at at least one point.

12. Rotor according to one or more of the preceding claims,
**characterised in that**
the blade connector loop (10) is embodied in the form of a bearing-stress laminate equipped with an orifice, and the rotor axis (A) extends through this orifice.

13. Rotor according to one or more of the preceding claims,
**characterised in that**
the blade connector loop (10) has at least one joining portion (12) spaced radially away from the axis (A) of the rotor mast (4) and at which the blade connector loop (10) is joined to the torque-transmission element (6).

14. Rotor according to one or more of the preceding claims,
**characterised in that**
the joining portion is configured as at least one joining tab (12).

15. Rotor according to one or more of the preceding claims,
**characterised in that**
the at least one joining tab (12) is disposed in the longitudinal direction (L) of the rotor blade (8) on the side of the blade connector loop (10) facing away from a rotor-blade tip.

16. Rotor according to one or more of the preceding claims,
**characterised in that**
the rotor mast (4) extends in unattached fashion in the region of the rotor head (2) through a ring-like centrifugal-force sleeve (16), and the blade connector loop (10) is placed around the centrifugal-force sleeve (16).

17. Rotor according to one or more of the preceding claims,
**characterised in that**
an elastic intermediate element is disposed between the ring-like centrifugal-force sleeve (16) and the rotor mast (4).

18. Rotor according to one or more of the preceding claims,
**characterised in that**
it is additionally configured as a bearingless rotor.

19. Rotorcraft, in particular a helicopter, in particular a tiltrotor helicopter, comprising at least one hingeless rotor according to one or more of Claims 1 to 18.

## Revendications

1. Rotor rigide, spécialement conçu pour un engin à ailes rotatives, comprenant : une tête de rotor (2), un mât de rotor (4) pourvu d'un axe de rotor (A), un élément de transmission du couple (6) raccordé au mât du rotor avec une protection contre la rotation, au moins une pale (8) et un raccordement de la pale du côté de la tête du rotor,
**caractérisé en ce que**
le raccordement de la pale du côté de la tête du rotor est pourvu d'une boucle de raccordement de la pale réduisant la force centrifuge (10), qui entoure l'axe du rotor (A) et le mât du rotor (4) et qui est raccordée à l'élément de transmission du couple (6) avec une protection contre la rotation (12,14).

2. Rotor selon la revendication 1,
**caractérisé en ce que**
la boucle de raccordement de la pale (10) s'étend sur la longueur (L) de la pale (8).

3. Rotor selon la revendication 1 ou 2,
**caractérisé en ce que**
la boucle de raccordement de la pale (10) est autonome.

4. Rotor selon la revendication 1 ou 2,
**caractérisé en ce que**
la boucle de raccordement de la pale (10) est ouverte et pourvue d'au moins un élément de fermeture de boucle afin de fermer la boucle de raccordement de la pale ouverte (10).

5. Rotor selon une ou plusieurs des revendications précédentes,
**caractérisé en ce que**
la boucle de raccordement de la pale (10) est constituée d'une ligne aplatie en forme de bande.

6. Rotor selon une ou plusieurs des revendications précédentes,
**caractérisé en ce que**
la boucle de raccordement de la pale (10) possède au moins deux sections de boucle (10b, 10c) qui s'étendent et se rejoignent sur plusieurs niveaux en formant une boucle.

7. Rotor selon une ou plusieurs des revendications précédentes,
**caractérisé en ce que**
la boucle de raccordement de la pale (10) comprend plusieurs lignes adjacentes et/ou superposées.

8. Rotor selon une ou plusieurs des revendications précédentes,
**caractérisé en ce que**
la boucle de raccordement de la pale (10) fait partie intégrante de la pale (8).

9. Rotor selon une ou plusieurs des revendications précédentes, avec plusieurs pales (8), **caractérisé en ce que**
les boudes de raccordement (10) des différentes pales (8) sont superposées dans le sens axial (A) du mât du rotor (4).

10. Rotor selon une ou plusieurs des revendications précédentes, avec plusieurs pales (8),
**caractérisé en ce que**
les boudes de raccordement (10) des différentes pales (8) sont suspendues les unes aux autres.

11. Rotor selon une ou plusieurs des revendications précédentes, avec plusieurs pales (8),
**caractérisé en ce que**
les boucles de raccordement (10) des différentes pales (8) sont reliées entre elles au niveau d'une position au moins (14).

12. Rotor selon une ou plusieurs des revendications précédentes,
**caractérisé en ce que**
la boucle de raccordement de la pale (10) est un stratifié renforcé pourvu d'un trou et l'axe du rotor (A) traverse ce trou.

13. Rotor selon une ou plusieurs des revendications précédentes,
**caractérisé en ce que**
la boucle de raccordement de la pale (10) comprend au moins une section de liaison (12) disposée radialement par rapport à l'axe (A) du mât du rotor (4), sur laquelle la boucle de raccordement de la pale (10) est reliée à l'élément de transmission du couple (6).

14. Rotor selon une ou plusieurs des revendications précédentes,
**caractérisé en ce que**
la section de liaison est formée d'au moins une éclisse de jonction (12).

15. Rotor selon une ou plusieurs des revendications précédentes,
**caractérisé en ce que**
l'éclisse de jonction (12) est installée dans le sens de la longueur (L) de la pale (8), du côté de la boucle de raccordement de la pale qui n'est pas en contact avec la pointe de la pale (10).

16. Rotor selon une ou plusieurs des revendications précédentes,
**caractérisé en ce que**
le mât du rotor (4) s'étend jusque dans la zone de la tête du rotor (2) au travers d'une bague centrifuge (16) sans contact, et la boucle de raccordement de la pale (10) encercle la bague centrifuge (16).

17. Rotor selon une ou plusieurs des revendications précédentes,
**caractérisé en ce que**
un élément intermédiaire élastique est placé entre la bague centrifuge (16) et le mât du rotor (4).

18. Rotor selon une ou plusieurs des revendications précédentes,
**caractérisé en ce que**
celui-ci forme un rotor sans palier.

19. Engin à ailes rotatives, plus particulièrement un hélicoptère, plus particulièrement un hélicoptère à rotor basculant, comprenant au moins un rotor rigide selon une ou plusieurs des revendications 1 à 18.
